# EUROPÄISCHE PATENTSCHRIFT

(11) **EP 4 479 587 B1**
(45) Veröffentlichungstag und Bekanntmachung des Hinweises auf die Patenterteilung: **23.09.2026**
(21) Anmeldenummer: 21839429.4
(22) Anmeldetag: 17.02.2022
(51) Int. Cl.: D21D 99/00, D21G 9/00, D21H 19/00

(54) **VERFAHREN ZUR ABTRENNUNG VON CELLULOSISCHEN FEINSTOFFEN AUS FASERSUSPENSIONEN UND/ODER FILTRATEN**
METHOD FOR SEPARATING CELLULOSIC PARTICULATES OUT OF FIBER SUSPENSIONS AND/OR FILTRATES
PROCÉDÉ DE SÉPARATION DE MATIÈRES FINES CELLULOSIQUES CONTENUES DANS DES SUSPENSIONS FIBREUSES ET/OU DES FILTRATS

(43) Veröffentlichungstag der Anmeldung: 25.12.2024
(73) Patentinhaber: Mondi AG, 1030 Wien (AT)
(72) Erfinder: LEITNER, Johannes, 4060 Leonding (AT); ZANGL-JAGIELLO, Lukas, 9524 Villach (AT); FISCHER, Wolfgang Johann, 8010 Graz (AT); KOPACIC, Samir, 8010 Graz (AT); MANDLEZ, Daniel, 8055 Graz (AT); ECKHART, Rene, 8045 Graz (AT); BAUER, Wolfgang, 8042 Graz (AT)
(74) Vertreter: Cunow, Gerda
(86) Internationale Anmeldenummer: PCT/EP2021/085695
(87) Internationale Veröffentlichungsnummer: WO 2022/129052

(56) Entgegenhaltungen:
- WO-A1-2011/113998
- WO-A1-2018/210495
- WO-A1-2019/219299
- FISCHER WOLFGANG ET AL: "Pulp Fines-Characterization, Sheet Formation, and Comparison to Microfibrillated Cellulose", POLYMERS, vol. 9, no. 12, 17 August 2017 (2017-08-17), pages 366, XP055882390, DOI: 10.3390/polym9080366
- DAVIDE BENEVENTI ET AL: "Highly Porous Paper Loading with Microfibrillated Cellulose by Spray Coating on Wet Substrates", INDUSTRIAL & ENGINEERING CHEMISTRY RESEARCH, vol. 53, no. 27, 9 July 2014 (2014-07-09), pages 10982 - 10989, XP055573733, ISSN: 0888-5885, DOI: 10.1021/ie500955x

## Beschreibung

### Gebiet der Erfindung

Die vorliegende Erfindung bezieht sich auf ein Verfahren zur Abtrennung von cellulosischen Feinstoffen aus Faserstoffsuspensionen und/oder Filtraten einer Papier- oder Zellstoffanlage und zum simultanen, neuerlichen Aufbringen der abgetrennten cellulosischen Feinstoffe auf eine Oberfläche von Papier, Karton oder Pappe sowie auf mit diesem Verfahren hergestelltes Papier, Karton oder Pappe.

### Stand der Technik

Bei der Papier-, Karton-, und Pappeherstellung wird, wie dies allgemein bekannt ist, lignocellulosisches Ausgangsmaterial, insbesondere Holz, das in der Holz- oder Zellstoffherstellung entweder mechanisch oder chemisch, insbesondere unter Zusatz von verschiedenen Chemikalien aufgeschlossen worden ist, eingesetzt. Der aufgeschlossene und gereinigte Faserstoff wird in der Folge mit weiteren Substanzen, wie Füllstoffen, wie z.B. Calciumcarbonat, Stärke, chemischen Additiven und dgl. versetzt und in der Folge über ein Sieb geführt und entwässert, worauf nach Herstellung eines Blatts oder einer Zellstofflage gegebenenfalls Leimungsmittel, Nassfestmittel oder andere Addititve zugemischt werden. Bei einem derartigen Herstellungsverfahren für Papier, Karton oder auch Pappe sowie Holz und Zellstoff wird in der modernen Industrie darauf geachtet, sowohl die Menge der notwendigen Prozesswässer, der Reststoffe als auch jene der nicht verbrauchten Kochchemikalien oder Additive mittels Kreislaufschließungen so gering wie möglich zu halten, um sowohl eine gute Massen- als auch Energiebilanz bereitstellen zu können. Wenn ein Faserstoff bzw. eine Faserstoffsuspension gereinigt und/oder entwässert wird, insbesondere auf konventionellen Filteranlagen filtriert wird, enthält dieses Filtrat neben einer Vielzahl von Chemikalien und/oder Additiven auch beträchtliche Mengen an Feinstoffen, die in diesen Filtraten suspendiert sind und welche üblicherweise über eine geeignete Verfahrensführung über Aggregate, wie z.B. Scheibenfilter, Waschpressen, Flotationsaggregate und dgl., im Prozess gehalten werden. An einer anderen Stelle der Papier-, Karton- und Pappenproduktion wird in weiterer Folge, wenn die Faserstoffsuspensionen über das Sieb geführt wird, die Faserstoffsuspensionen stark entwässert, um in weiterer Folge mit Pressen und Trocknungsaggregaten eine trockene Papier- oder Pappebahn zu erzielen. Gemeinsam mit den Filtraten werden Feinstoffe und ggf. eingesetzte Additive aus dem Fasernetzwerk ausgewaschen. Diese Feinstoffe werden in der Aufreinigung des Filtrats mittels Bogensieb, Scheibenfilter, DAF (Dissolved Air Flotation) oder ähnlichen Aggregaten entfernt, um das Filtrat wieder einsetzen zu können. In jüngerer Vergangenheit wurde festgestellt, dass die Anwendung von mikro- oder nanofibrillierter Cellulose (MFC bzw. NFC) in einem oder die Applikation auf einem Papier, einem Karton oder einer Pappe deren Eigenschaften verändern kann, um dadurch beispielsweise verbesserte mechanische Eigenschaften zu erreichen, die Barriereeigenschaften (wie z.B. Luftdurchlässigkeit, Sauerstoff- oder Wasserdampftransmission oder Fettdurchlässigkeit) des Papiers, des Kartons oder der Pappe zu verändern, die optischen Eigenschaften (wie z.B.: Glanz) zu verbessern ebenso wie seine/ihre Wasserabsorption. Unter mikrofibrillierter oder nanofibrillierter Cellulose wird hier eine Cellulose verstanden, die durch Hochdruckhomogenisierung oder feines Vermahlen von herkömmlichen Zellstoffen mit oder ohne Einsatz von Chemikalien oder Enzymen oder dergleichen oder gemeinsames Vermahlen mit weiteren Mahlmedien, wie beispielsweise gemahlenem Calciumcarbonat, Ton (Kaolin) oder anderen Mineralien hergestellt wird. Der Nachteil von einer derartigen kommerziell hergestellten mikro- oder nanofibrillierten Cellulose liegt darin, dass sie nur mit hohem Energieaufwand hergestellt werden kann. Zusätzlich ist ein Transport von MFC oder NFC aufgrund des zumeist niedrigen Feststoffgehalts in einer wässrigen Suspension ökonomisch nicht zielführend.

Das Aufbringen von mikro- oder nanofibrillierter Cellulose bzw. mikrofibrillierten Cellulosefragmenten ist beispielsweise in dem Dokument Beneventi et al. (2014); Industrial & Engineering Chemistry Research 53(27):10982-10989 beschrieben, gemäß welchem derartige mikrofibrillierte Cellulosefragmente (MFC-Fragmente) auf eine faserige Bahn aufgesprüht werden, um Kompositmaterialien herzustellen, welche bessere bzw. günstigere Oberflächen- und Barriereeigenschaften aufweisen.

Aus der JP 2016130387 ist ein Verfahren zur Herstellung von Papier bekanntgeworden, bei welchem zwei Fraktionen an Fasern, eine Langfaserfraktion und eine kurze bzw. Feinstoffe enthaltende Fraktion, vermischt werden und daraus Papier hergestellt wird.

Der Artikel Pulp Fines Charracterisation, Sheet Formation and Comparision to Microfibrillated Cellulose; Polymers (Basel); 2017 Aug. 17; 9(8):366 von Fischer WJ, Mayr M, Spirk S, Reishofer D, Jagiello LA, Schmiedt R, Colson J, Zankel A, Bauer W. beschreibt das Abtrennen von Feinstoffen aus verschiedensten Pulpen und die nachfolgende Blattbildung aus diesen abgetrennten Feinstoffen.

Ein Verfahren zur Abtrennung von Feinstoffen mit einer Größe von kleiner als 1200 µm aus Faserstoffsuspensionen ist zudem aus WO 2011/113998 A1 bekannt.

Im Zuge von Versuchen wurde festgestellt, dass die in Faserstoffsuspensionen und verschiedenen Filtraten aus der Papier-, Karton- ,Pappe- und Zellstoffherstellung enthaltenen faserigen bzw. cellulosischen Feinstoffe in ähnlicher Weise wie mikro- oder nanofibrillierte Cellulosen verwendet werden können, um die Oberflächen- und Barriereeigenschaften und die mechanischen Eigenschaften von Papier, Karton und Pappe zu verändern.

### Beschreibung der Erfindung:

Die vorliegende Erfindung zielt nun darauf ab, ein Verfahren bereitzustellen, mit welchem es ökonomisch möglich ist, die aus der Papierherstellung oder Zellstoffherstellung stammenden Faserstoffsuspensionen und/oder Filtrate mit einem Gehalt an cellulosischen Feinstoffen derart weiterzuverarbeiten und/oder mit weiteren Additiven derart zu versetzen, dass die darin enthaltenen cellulosischen Feinstoffe, gegebenenfalls gemeinsam mit weiteren Bestandteilen der Filtrate auf Papier, Karton oder Pappe aufgebracht werden können, um deren Oberflächen-, Barriere- und mechanische Eigenschaften zu verbessern.

Zur Lösung dieser Aufgabe wird das erfindungsgemäße Verfahren im Wesentlichen so geführt, dass zumindest die nachfolgenden Schritte durchgeführt werden.
a) Abtrennen der cellulosischen Feinstoffe aus den Filtraten mit einer Größe von kleiner als 1200 µm, insbesondere kleiner als 900 µm, vorzugsweise kleiner als 600 µm, noch bevorzugter kleiner als 400 µm insbesondere bevorzugt kleiner als 200 µm (gemessen nach ISO 16065-1) sowie von gegebenenfalls enthaltenen weiteren Additiven,
b) gegebenenfalls Eindicken der abgetrennten cellulosischen Feinstoffe derselben,
c) gegebenenfalls Vermischen der abgetrennten cellulosischen Feinstoffe mit weiteren Feinstoffen aus einer Papier-, Karton-, Pappe- oder Zellstoffherstellung, und/oder mikro- oder nanofibrillierter Cellulose (MFC oder NFC),
d) gegebenenfalls Ausbilden einer wässerigen Suspension aus den Feinstoffen oder gegebenenfalls der Mischung von Feinstoffen aus der Papier-, Karton-, oder Pappenherstellung stammenden Additive,
e) gegebenenfalls Zusetzen zu der Suspension von in der Papier-, Karton-, Pappe- oder Zellstoffherstellung verwendeten Additiven, insbesondere nativer, derivatisierter oder oxidativ behandelter Stärke, Leimungsmitteln, Nassfestmitteln oder anderen chemischen Additiven oder von Mineralen wie. z.B. Calciumcarbonat oder Kaolin,
f) homogenes Aufbringen der gebildeten Suspension auf die Oberfläche einer Papier-, Karton- oder Pappebahn in einer Menge zwischen 4 und 15 g atro/m² (atro = absolut trocken) der in der Suspension befindlichen Feststoffe, wobei der Gehalt an Feinstoff in der Suspension bis zu 100 % der in der Suspension enthaltenen Trockenmasse, vorzugsweise unter 90,0 % der in der Suspension enthaltenen Trockenmasse beträgt, und
g) Trocknen des Papiers, Kartons oder der Pappe sowie gegebenenfalls gleichzeitiges oder nachfolgendes Pressen, Satinieren, Beschichten mit Additiven in einer Film- oder Sumpfleimpresse oder einem Sprühverfahren oder anderen in der Papier-, Karton- und Pappeherstellung eingesetzten Beschichtungsaggregaten,
h) gegebenenfalls Wiederholen der Schritte f) und g).

Mit einer derartigen Verfahrensführung gelingt es nicht nur, cellulosische Feinstoffe aus den verschiedensten in der Papier-, Karton-, Pappe- oder Zellstoffherstellung anfallenden Filtraten und/oder Faserstoffsuspensionen abzutrennen, sondern diese abgetrennten cellulosischen Feinstoffe bzw. allgemein die abgetrennten faserigen Bestandteile können unmittelbar und ohne dass sie an einem anderen, örtlich vom Ort des Anfalls der cellulosischen Feinstoffe verschiedenen Einsatzort, insbesondere eine andere Papier-, Karton-, Pappe- oder Zellstofffabrik verfahren werden müssen, wieder in ein und demselben Herstellungsverfahren oder in der Herstellung einer anderen Papier-, Karton- oder Pappequalität als jene aus dessen Filtraten sie entnommen wurden, jedoch zu einem späteren Zeitpunkt eingesetzt werden. Überraschender Weise wurde festgestellt, dass durch das Abtrennen von Feinstoffen aus den Filtraten der Papier-, Karton-, Pappe- oder Zellstoffherstellung im weiteren Produktionsprozess von Papier und/oder Karton bzw. Pappe und in dem hergestellten Endprodukt, insbesondere im Papier-, Karton- oder Pappekörper keinerlei Verschlechterung der Eigenschaften festzustellen ist, obwohl durch das Abtrennen der cellulosischen Feinstoffe ein nicht vernachlässigbarer Gehalt an Bestandteilen der Faserstoffsuspensionen bzw. Filtraten aus diesen entfernt wurden. Überraschenderweise hat sich sogar gezeigt, dass mit einer erfindungsgemäßen Verfahrensführung die Effektivität von im Produktionsprozess verbliebenen Additiven durch die Entfernung der Feinstoffe aus der Faserstoffsuspension sogar erhöht werden kann sowie die Entwässerung der Fasersuspension verbessert werden kann.

Im Stand der Technik ist eine Rückführung von cellulosischen Feinstoffen aus Filtraten der Papier-, Karton-, Pappe- und Zellstoffherstellung in den Herstellungsprozess von Papier-, Karton-, Pappe oder Zellstoff, z.B. Zusetzen der Feinstoffe vor dem Mahlen oder zum Mischbehälter nach dem Mahlen, oder an anderen Stellen im Papierproduktionsprozess vor der Headbox bekannt. Es konnte jedoch gezeigt werden, dass durch dieses neuerliche Zusetzen der cellulosischen Feinstoffe in das Herstellungsverfahren die Effektivität der eingesetzten erforderlichen Additiven negativ beeinflusst wird, und dass das Vorhandensein von Feinstoffen in der Faserstoffsuspension einen signifikant negativen Einfluss auf die Entwässerung derselben hat. So konnte beispielsweise durch Entfernung eines Teils der Feinstoffe, wie dies in der vorliegenden Erfindung vorgenommen wird, der Mahlgrad (nach ISO 5267 - 1:2004) von 20 °SR auf 15 °SR verbessert werden, wobei der Zugfestigkeitsindex der Papierproben bei teilweiser Entfernung der cellulosischen Feinstoffe auf 103 - 106 N/mg (nach ISO 1924-3:2005 Laborblätter nach ISO 5269-2:2004, Flächengewicht nach ISO 536:2012) gegenüber einem Vergleich ohne Reduzierung der Feinstoffe, bei welchem er bei 98 - 101 Nm/g (nach ISO 1924-3:2005 Laborblätter nach ISO 5269-2:2004, Flächengewicht nach ISO 536:2012) lag, stieg. Weiterhin entsteht durch die nach dem Stand der Technik angewandte Rückführung der Feinstoffe aus den Filtraten ein erhöhter Bedarf an Retentionsmittel als Teil der chemischen Papieradditive, die je nach den produzierten Papier-, Karton- und Pappequalitäten der Faserstoffsuspension im Konstantteil einer Papier-, Karton und Pappemaschine (bis unmittelbar vor der Headbox) zugegeben werden können. Gängige Zwei-Komponenten Retentionsmittelsysteme bestehen aus langkettigen kationischen und kurzkettigen anionischen Polymeren bzw. letztere können gegebenenfalls auch durch anionische Mikropartikel ersetzt werden und werden vorwiegend eingesetzt, um Fasern und vorwiegend cellulosische Feinstoffe und anorganische Füllstoffe an der Siebpartie einer Papiermaschine in dem feuchten umlaufenden Papier zu binden. Hierbei sind einerseits die spezifischen Chemikalienkosten für derartige Retentionsmittelsysteme nicht unbeträchtlich und andererseits gelingt es mit diesen nur selten einen Zielwert von über 90 % Gesamtretention zu erreichen. Durch die im erfindungsgemäßen Verfahren beschriebene Prozessführung gelingt es, die oben beschriebene nachteilige Rückführung der cellulosischen Feinstoffe zu unterbinden. Durch die Abtrennung der Fein- und Füllstoffe aus den Faserstoffsuspensionen und/oder Filtraten und Aufbringen auf eine Papierbahn, wie beispielsweise an der Siebpartie einer Papiermaschine, kann eine beinahe 100 %ige Retention erreicht werden und somit die Dosierung an Retentionsmittel deutlich reduziert werden, was eine wesentliche Vereinfachung der Verfahrensführung bedeutet.

Durch das Abtrennen sowie gegebenenfalls das Vermischen der abgetrennten cellulosischen Feinstoffe mit weiteren Feinstoffen aus anderen Prozessschritten des Herstellungsverfahrens oder auch Begleitstoffen, wie Additiven, Chemikalien oder Mineralien, aus der Papier-, Karton-, Pappe- oder Zellstofferzeugung, gelingt es, ein Oberflächenbeschichtungsmaterial bereitzustellen, welches unmittelbar aus dem Verfahren stammt und im selben Verfahren nach bzw. während der Blattbildung wiederum auf die Papier-, Karton- oder Pappeoberfläche aufgebracht werden kann. Je nach der Art der in den diversen Filtraten enthaltenen, aus der Papier-, Karton oder Pappeherstellung stammenden Additive bzw. gegebenenfalls durch gezielten Zusatz von Additiven, Chemikalien oder Mineralien oder dgl. gelingt es, eine selektive Oberflächenbehandlung des Papiers, Kartons oder der Pappe durchzuführen mit Ergebnissen, die in dieser Größenordnung der Verbesserung für einen Fachmann vollständig unerwartet waren.

So gelingt es beispielsweise, die Luftdurchlässigkeit des Papiers, Kartons, oder der Pappe (Gurley-Wert nach ISO 5636-5:2003) durch das Aufbringen von aus den Filtraten abgetrennten Feinstoffen derart zu verringern, dass das Papier oder die Pappe nahezu luftundurchlässig wird.

Feinstoffe ebenso wie Begleitstoffe in den Filtraten der Papier-, Karton-, Pappe- und Zellstoffherstellung haben unterschiedliche Eigenschaften. In der Anwendung werden diese zu unterschiedlichen Ergebnissen an dem Endprodukt, nämlich dem Papier, Karton, oder der Pappe führen, diese Unterschiede sind jedoch nicht ausschließlich auf die nachfolgende Unterteilung in drei Gruppen von Feinstoffen zurückzuführen sondern sind auch durch die Art der mit den Feinstoffen abgetrennten, meist in der wässrigen Suspension suspendierten oder gelösten Begleitstoffe mitbestimmt. Unter Feinstoffen oder auch Zellstofffasern werden im Zusammenhang mit der vorliegenden Erfindung folgende Materialien verstanden:
- Primärer Feinstoff: Ein Feinstoff, der bevorzugt aus partikulären lignocellulosischen Stoffen besteht und bevorzugt aus einer ungemahlenen Zellstoffsuspension abgetrennt wird.
- Sekundärer Feinstoff: Ein Feinstoff, der bevorzugt durch eine mechanische Faserbehandlung wie z.B. der Mahlung in der Zellstoff- und Papier-, Karton-, Pappeherstellung entsteht;
- andere Arten von Feinstoffen, wie beispielsweise Chemikalien, Additive und Mineralien, die aus den Filtraten der Papier-, Karton-, Pappe- und Zellstoffherstellung stammen.

Unter Begleitstoffen werden hier Additive, Chemikalien oder Mineralien verstanden, die bei einer Filtration während der Papier-, Karton-, Pappe- und Zellstoffherstellung mit abgetrennt werden, einerseits aufgrund ihrer Größe oder ihrer Löslichkeit in dem jeweiligen Filtrat und andererseits aufgrund der Tatsache, dass sie an die Feinstoffe entweder chemisch oder physikalisch gebunden sind.

Unter den Begriffen Zellstoff und Faserstoff wird hier sowohl Zellstoff bzw. Faserstoff aus dem chemischen Holzaufschluss als auch Holzstoff aus den unterschiedlichen mechanischen Holzaufschlussverfahren sowie Abwandlungen (wie thermo-chemischer Holzstoff) dieser in der Papier- und Zellstoffindustrie gängigen Verfahren verstanden.

Unter den in der Papier-, Karton-, Pappe- oder Zellstoffherstellung verwendeten Additiven, Chemikalien und Mineralien wird hier verstanden:
- Calciumcarbonat,
- Talkum,
- Ton (Kaolin) oder
- Titandioxid oder andere Mineralien
   sowie gegebenenfalls Additive und Chemikalien wie
- Leimungsmittel, z.B.
   - alkylierte Ketendimeren (AKD),
   - Bernsteinsäureanhydride (ASA),
   - anionisch und kationisch modifizierte Harz- und Fettsäuren
- native und modifizierte Stärken, wie
   - derivatisierte kationische, anionische und amphotere Stärken,
   - oxidadtiv behandelte Stärken
   - enzymatisch behandelte Stärken, oder
   - säurekatalytisch abgebaute Stärken
- Retentionsmittel
- Nassfestmittel (Epichlorhydrin, Harnstoffformaldehyd oder ähnliche)
- oberflächenaktive Stoffe (allg. Tenside) (anionische, kationische, nicht-ionische Tenside)
- organische (kationische und anionische Polymere) und anorganische (z.B. Aluminiumsulfat, Polyaluminiumchlorid) Fixiermittel oder sämtliche andere, in der Papier-, Karton oder Pappeherstellung eingesetzten chemischen Additive
- fettabweisende Chemikalien:
   - Fluor-basierte Formulierungen
   - Perfluoralkylsäuren (PFAAs), wie Perfluorcarbonsäuren (PFCAs) oder Perfluorsulfonsäuren (PFSAs)
   - Fluor-freie Formulierungen, die z.B. auf Stärkederivaten, modifizierten Polymeren, etc. basieren.

Unter Filtraten aus der Papier-, Karton-, Pappe- und Zellstoffherstellung werden unter anderem folgende Prozessströme verstanden:
- Waschfiltrate wie z.B. aus der der Braunstoffwäsche, der Bleiche etc:
- Klarfiltrat
- Trübfiltrat
- Siebwässer

Gemäß einer Weiterbildung der Erfindung wird das Verfahren so geführt, dass eine(s) oder mehrere der Faserstoffsuspensionen und/oder der Filtrate einer Papiermaschine, Karton- oder Pappemaschine oder Zellstoff-Herstellungsanlage nach einem Sortieraggregat, wie beispielsweise einem Drucksortierer, einem Bogensieb oder einem Bandwäscher, die in dem Abtrennschritt zum Abtrennen von Feinstoffen sowie gegebenenfalls von weiteren enthaltenen Additiven verwendet werden, eingesetzt wird/werden. Indem eine(s) oder mehrere der Faserstoffsuspensionen und/oder der Filtrate einer Papiermaschine oder einer Zellstoff-Herstellungsanlage nach einem Sortieraggregat, die in dem Abtrennschritt zum Abtrennen von Feinstoffen sowie von gegebenenfalls enthaltenen weiteren Additiven verwendet werden, eingesetzt wird/werden, gelingt es einerseits, die bekannten negativen bzw. nachteiligen Effekte der Feinstoffe, wie beispielsweise auf die Entwässerung oder die Menge an erforderlichen Retentionsmittel, zu vermeiden und andererseits gleichzeitig ein Papier-, Karton- bzw. Pappeprodukt zu erhalten, dessen Oberflächeneigenschaften gegenüber herkömmlich behandelten Oberflächen von Papier, Karton und Pappe deutlich verbessert sind.

Indem, wie dies einer Weiterbildung der Erfindung entspricht, das Verfahren so geführt wird, dass das Abtrennen der Feinstoffe aus den Faserstoffsuspensionen und/oder Filtraten in einem ein- oder mehrstufigen Trenn- und/oder Filtrationsverfahren, insbesondere mit einem Sortieraggregat oder einem Scheibenfilter oder einem Flotationsverfahren, wie einer DAF (Dissolved Air Flotation) durchgeführt wird, kann sichergestellt werden, dass sämtliche Feinstoffe einer bestimmten Größe bzw. Dicke sowie gegebenenfalls an deren Oberfläche angelagerte weitere Additive aus dem Papierherstellungsverfahren abgezogen werden und in der Folge für das Aufbringen auf die Papieroberfläche zur Verfügung stehen. Als besonders günstig haben sich hierbei Verfahren wie ein Abtrennverfahren mit Hilfe von Sortieraggregaten wie Drucksortierer, wie Scheibenfilter oder ein Flotationsverfahren, wie die DAF, erwiesen, bei welchen ein Aufschwimmen der Feinstoffe an der Oberfläche des Filtrats erreicht werden kann. Mit einem derartigen Abtrennverfahren wird nicht nur ein sehr großer Bestandteil der cellulosischen Feinstoffe, die in den Filtraten und/oder Faserstoffsuspensionen enthalten sind, zurückgewonnen, sondern überdies auch sichergestellt, dass wenige bzw. keine zusätzlichen Hilfsmittel eingesetzt werden müssen, um ein im Wesentlichen vollständiges bzw. quantitatives Abtrennen der Feinstoffe aus den Filtraten zu gewährleisten.

Um sicherzustellen, dass bei Einsatz der aus den Faserstoffsuspensionen und/oder Filtraten gewonnen Feinstoffe bzw. gegebenenfalls weiteren Additiven auf einer Papier-, Karton- bzw. Pappeoberfläche diese nicht unnötig befeuchtet und auf diese Weise nicht nur die Verfahrenskosten erhöht werden müssen, sondern überdies auch die Verfahrensführung drastisch verändert werden muss, wird das erfindungsgemäße Verfahren im Wesentlichen so geführt, dass ein Eindicken einer Feinstoffsuspension bis zu einem Gesamtfeststoffgehalt umfassend cellulosische Feinstoffe sowie gegebenenfalls aus der Papier-, Karton- oder Pappeherstellung stammende Additive zwischen 1 und 30 Gew.-%, insbesondere 3 bis 10 Gew.-% durchgeführt wird. Ein Eindicken auf einen Gehalt von Feinstoffen sowie gegebenenfalls aus der Papier-, Karton- oder Pappeherstellung stammenden Additiven auf einen Gehalt zwischen 1 und 30 Gew.-%, insbesondere 3 bis 10 Gew.-% in Bezug auf die Trockenmasse führt dazu, dass eine einen relativ hohen Gehalt an cellulosischem Feinstoff aufweisende Suspension auf die Oberfläche von Papier, Karton oder Pappe aufgebracht wird, um unmittelbar das Produkt mit verbesserten Oberflächeneigenschaften, insbesondere einer deutlichen verringerten Luftdurchlässigkeit bereitstellen zu können.

Um sicherzustellen, dass die Oberflächenvergütung mit dem erfindungsgemäßen Verfahren in einem einzigen Schritt durchgeführt werden kann und nicht zwei voneinander getrennte Schritte des Aufbringens von Feinstoffen und nachfolgend von Hilfsstoffen bzw. Zusatzstoffen durchgeführt werden müssen, ist das erfindungsgemäße Verfahren im Wesentlichen dahingehend weitergebildet, dass der aus den cellulosischen Feinstoffen gebildeten Suspension als weitere Additive für die Oberflächenbehandlung von Papier, Karton oder Pappe wenigstens ein Additiv gewählt aus der Gruppe bestehend aus Calciumcarbonat, Talkum, Ton, Titandioxid, alkylierte Ketendimere (AKD), Alkenylbernsteinsäureanhydrid (ASA), kationische oder native/anionische Harzleime, Fettsäuren, kationische Stärke oder native, enzymatisch oder oxidativ abgebaute Stärke sowie Retentionsmittel sowie Retentionsmittel oder dergleichen zugesetzt wird. Durch Zusatz von weiteren Additiven zu der aus den Feinstoffen gebildeten Suspension kann der Fachmann auf dem Gebiet der Papierherstellung vorab bereits eine Suspension herstellen, mit welcher er die für ihn günstigsten gewünschten Oberflächeneigenschaften eines fertigen Papiers, Karton bzw. einer fertigen Pappe erreichen kann. Es erübrigt sich festzuhalten, dass ein Aufbringen der cellulosischen Feinstoffe sowie der weiteren Additive nicht auch mehrfach an verschiedenen Punkten der Herstellung von Papier, Pappe oder Karton durchgeführt werden kann, wie beispielsweise in der Siebpartie und zu einem späteren Zeitpunkt auf dem trockenen Papier.

Gewünschte Oberflächeneigenschaften sind beispielsweise Barriereeigenschaften, wie eine definierte Luftdurchlässigkeit und Wasserdampfdurchlässigkeit, Oberflächeneigenschaften, wie eine Oberflächenhydrophobisierung oder Reduzierung der Rauigkeit, sowie mechanische Eigenschaften wie eine Veränderung der Arbeitsaufnahme (TEA), eine Erhöhung der Biegesteifigkeit, aber auch optische Eigenschaften wie und die Helligkeit bzw. der Glanz des Papiers können auf diese Weise deutlich verbessert bzw. erhöht werden.

In diesem Zusammenhang ist es wichtig, das exakte Verhältnis zwischen den cellulosischen Feinstoffen und weiteren Additiven so zu wählen, dass die gewünschten Oberflächeneigenschaften des fertigen Papiers, Kartons bzw. der fertigen Pappe erreicht werden können. Gemäß einer Weiterbildung der Erfindung ist das Verhältnis im Wesentlichen so gewählt, dass ein Verhältnis Feinstoff zu weiteren Additiven zwischen 1:100 und 100:1, vorzugsweise zwischen 1:80 und 80:1, noch bevorzugter zwischen 1:20 und 20:1, am bevorzugtesten zwischen 1:15 und 15:1, wie beispielsweise 3:1 oder 1:3 gewählt wird. Auch wenn hier ein großer und insbesondere weiter Bereich von der vorliegenden Erfindung abgedeckt ist, ist es einem Fachmann auf dem Gebiet der Technik klar, dass, je nach gewünschten Oberflächeneigenschaften des fertigen Papiers, Kartons bzw. der fertigen Pappe extrem unterschiedliche Einsatzmengen der einzelnen Bestandteile zum Einsatz gelangen müssen, so dass, wenn beispielsweise ein luftundurchlässiges Papier hergestellt werden soll, der Gehalt an Feinstoffen höher sein muss, wohingegen bei Erhöhen eines hydrophoben Charakters des Papiers, Kartons oder der Pappe, eine größere Menge an Hilfsstoffen erforderlich ist. Eine beispielhafte Zusammensetzung aus Feinstoffen und Additiven besteht beispielsweise aus 99,9 % Feinstoffen und 0,1 % Additiven, wie Füllstoffe und Pigmente, wodurch eine nahezu ausschließlich aus Feinstoffen bestehende Beschichtung herstellbar ist. In analoger Weise könnte eine Zusammensetzung aus lediglich 10 % Feinstoffen und 90 % Additiven, wie Pigmenten, Nassfestmitteln oder Füllstoffen bestehen, in welchem Fall z.B. eine stärker pigmentierte Oberfläche erhalten werden kann.

Besonders gute Eigenschaften können erzielt werden, wenn das Verfahren so geführt wird, dass die Feinstoffe in Form von mit weiteren aus der Papier-, Karton- oder Pappenherstellung stammenden Additiven, wie Calciumcarbonat, Talkum, Ton, Titandioxid, alkylierte Ketendimere (AKD), Alkenylbernsteinsäureanhydrid (ASA), kationische oder native/anionische Harzleime, Fettsäuren, kationische Stärke oder native, enzymatisch oder oxidativ abgebaute Stärke sowie Retentionsmittel, imprägnierte Feinstoffe oder in Form von Addukten der Additive an der Oberfläche der Feinstoffe eingesetzt werden. Bei einer derartigen Verfahrensführung gelingt es insbesondere eine vollkommen gleichmäßige Verteilung von sowohl Feinstoffen als auch weiteren aus der Papier-, Karton- und Pappeherstellung stammenden Additiven auf der Oberfläche von Papier bzw. Pappe zu erreichen und es kann somit ein insbesondere homogenes Endprodukt erhalten werden. Derartige homogene Endprodukte zeigen nicht nur verbesserte Oberflächeneigenschaften sondern es kann insbesondere sichergestellt werden, dass da die Feinstoffteilchen mit den weiteren Additiven, wie Calciumcarbonat, Talkum, Ton, Titandioxid, alkylierte Ketendimere (AKD), Alkenylbernsteinsäureanhydrid (ASA), kationische oder native/anionische Harzleime, Fettsäuren, kationische Stärke oder native, enzymatisch oder oxidativ abgebaute Stärke sowie Retentionsmittel, imprägniert sind oder als Addukte mit diesen Substanzen vorliegen, immer wenigstens beide Produkte in einem gezielten Mengenverhältnis zueinander aufgebracht werden können und somit besonders gleichmäßig über die Oberfläche verteilt werden können.

Um die aus den verschiedensten Filtraten und/oder Faserstoffsuspensionen der Papier-, Karton- oder Pappeherstellung abgetrennten Feinstoffe in der Folge auf die Oberfläche von Papier, Karton oder Pappe aufzubringen, hat es sich als vorteilhaft erwiesen, den pH-Wert der Suspension einzustellen, wobei je nach gewünschten Oberflächeneigenschaften unterschiedliche pH-Werte der Suspension eingestellt werden können. Bevorzugt haben sich hierbei gemäß der Erfindung pH-Werte für eine auf Papier-, Karton- oder Pappeoberflächen aufzubringende Suspension von pH 2 und pH 11, bevorzugt pH 3,5 und pH 9,5, insbesondere 4 bis 9 erwiesen.

Als besonders gut für das Aufbringen von aus Faserstoffsuspensionen und/oder Filtraten der Papier-, Karton- oder Pappeherstellung gewonnenen Feinstoffen auf eine feuchte Papieroberfläche haben sich gemäß der Erfindung Oberflächenbeschichtungsverfahren wie ein Oberflächenbeschichten einer einen Trockengehalt zwischen 2 und 100 %, %, vorzugsweise 5 % bis 95 %, besonders bevorzugt 10 % bis 50 % aufweisenden Papierbahn, Karton- oder Pappebahn, wie beispielsweise in einer Filmpresse oder Sumpfpresse oder ein Sprühverfahren erwiesen. Bei einem derartigen Beschichtungsverfahren hat die feuchte Papierbahn bereits eine Struktur und die wichtigsten durch die Papiermaschine einstellbaren Parameter sind bereits festgelegt, wie beispielsweise das Flächengewicht eines Papiers, jedoch können zu diesem Zeitpunkt die Oberflächeneigenschaften des Papiers besonders effizient an die endgültigen Erfordernisse angepasst werden.

Indem das erfindungsgemäße Verfahren so geführt wird, dass nach dem Oberflächenbeschichtungsverfahren ein Oberflächenvergütungsverfahren, wie Satinieren, Pressen, Trocknen auf einem polierten, Maschinen geglätteten Yankeezylinder, in einer Beschichtungsanlage, wie einer Film- oder Sumpfleimpresse, Walzen oder Glätten durchgeführt wird, gelingt es, die durch die Oberflächenbeschichtung mit Hilfe der abtrennten Feinstoffe aus den Faserstoffsuspensionen und/oder Filtraten der Papier-, Karton- bzw. Pappeherstellung erreichten Oberflächenverbesserungen noch weiter zu verbessern, beispielsweise indem noch eine höhere Glätte, Luftundurchlässigkeit und dgl. durch das Oberflächenvergütungsverfahren erreicht wird.

Die Erfindung bezieht sich weiterhin auch auf ein Papier, einen Karton oder eine Pappe, die nach einem Verfahren gemäß der Erfindung hergestellt sind. Ein derartiges Papier, ein derartiger Karton oder eine derartige Pappe sind im Wesentlichen dadurch gekennzeichnet, dass das Papier, der Karton oder die Pappe eine Oberflächenbeschichtung, welche zwischen 4 g atro/m² und 15 g atro/m² Feinstoffe sowie gegebenenfalls weitere Additive enthält, aufweisen. Indem ein Papier, Karton- bzw. eine Pappe hergestellt werden, welche eine Oberflächenbeschichtung aufweisen, die zwischen 4 g atro/m² und 15 g atro/m² Feinstoffe sowie gegebenenfalls weitere Additive in der Beschichtung enthalten, gelingt es, ein Papier, einen Karton und eine Pappe bereitzustellen, das/der/die im Vergleich zu herkömmlich hergestellten Produkten deutlich verbesserte Oberflächeneigenschaften aufweisen. So kann beispielsweise eine nahezu vollständig luftundurchlässige Pappe bzw. ein luftundurchlässiges Papier bzw. ein luftundurchlässiger Karton bereitgestellt werden, ein Papier, Karton mit verbessertem Glanz, einer verbesserten Feuchtigkeitsbeständigkeit bzw. einer erhöhten Glätte erhalten werden, wobei sämtliche dieser Eigenschaften immer im Vergleich zu einem Papier, einer Pappe oder einem Karton gesehen werden, das, der bzw.
die aus einer Faserstoffsuspension hergestellt wurden, in welcher die Feinstoffe im Zuge des Verfahrens nicht abgezogen wurden und nicht, wie im Verfahren gemäß der vorliegenden Erfindung, im Herstellungsprozesses als Oberflächenbeschichtungsmaterial wieder aufgetragen wurden.

Gemäß einer Weiterbildung der Erfindung ist ein derartiges Papier so ausgebildet, dass die Oberflächenbeschichtung aus einer Mischung aus Feinstoffen, insbesondere einer Mischung aus Feinstoffen sowie in den Filtraten aus der Papier-, Karton, Pappe- oder Zellstoffherstellung enthaltenen Additiven besteht. Ein derartiges Papier zeichnet sich gegenüber herkömmlich hergestellten Papieren im Wesentlichen dadurch aus, dass für seine Oberflächenvergütung nahezu ausschließlich aus dem Verfahren stammende Additive bzw. Feinstoffe verwendet werden und somit nicht nur eine wesentliche Kostenersparnis sondern insbesondere eine Rohstoffersparnis mit einem derartigen Papier erreicht werden kann.

Um die Oberflächeneigenschaften eines derartigen Papiers, Kartons, oder einer derartigen Pappe exakt an die nachfolgenden Erfordernisse anpassen zu können, ist das Papier, der Karton bzw. die Pappe dahingehend weitergebildet, dass die Oberflächenbeschichtung neben Feinstoffen, der Mischung aus Feinstoffen und den aus Filtraten der Papier-, Karton-, Pappe- oder Zellstoffherstellung stammenden Additiven, wie Calciumcarbonat, Talkum, Ton, Titandioxid, alkylierte Ketendimere (AKD), Alkenylbernsteinsäureanhydrid (ASA), kationische oder native/anionische Harzleime, Fettsäuren, kationische Stärke oder native, enzymatisch oder oxidativ abgebaute Stärke sowie Retentionsmittel, weitere vor der Beschichtung zugesetzte Additive, wie Tenside, Pigmente oder Füllstoffe enthält. Insbesondere durch den Zusatz von weiteren vor der Beschichtung zugesetzten Additiven gelingt es, neben den positiven Effekten durch die Feinstoffe und den aus der Herstellung stammenden Additiven, die Oberflächeneigenschaften des Papiers gezielt zu beeinflussen und somit exakt für die Anforderungen eines Endbenutzers entsprechende Papierqualitäten bzw. Pappequalitäten bereitzustellen.

Die Mengen der weiteren Additive in der Oberflächenbeschichtung liegen im Bereich von von 0,5 Gew.-% bis 99 Gew.-% der Trockenmasse der Beschichtungssuspension, wodurch es gelingt, exakt auf die Bedürfnisse des Letztverbrauchers abgestellte und gleichzeitig günstig hergestellte Papiere, Kartone bzw. Pappen bereitzustellen.

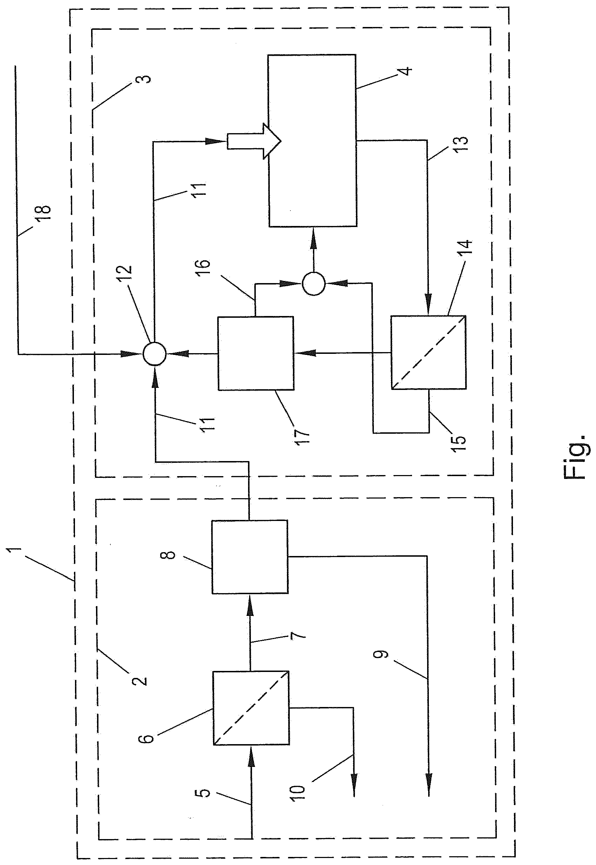

Die Erfindung wird nachfolgend anhand von Zeichnungen bzw. Ausführungsbeispielen näher erläutert. In diesen zeigt
Fig. 1 eine schematische Darstellung eines Fließschemas einer integrierten Zellstoff-, Papier-, Karton oder Pappefabrik, welche die Möglichkeit des Abtrennens von Feinstoffen sowie das endgültige Aufbringen derselben schematisch zeigt.

In dieser Darstellung ist durch die unterbrochene Umfangslinie 1 eine integrierte Zellstoff-, Papier-, Karton oder Pappe-Herstellungsanlage angedeutet, welche integrierte Papier- und Zellstoffherstellungsanlage in zwei voneinander verschiedene Anlagen unterteilt ist, wie eine Zellstoffherstellungsanlage, welche aber auch eine Papier-, Karton oder Pappe-Herstellungsanlage sein könnte, die durch eine weitere unterbrochene Umfangslinie 2 dargestellt ist und in der Folge als Zellstoff-Herstellungsanlage 2 bezeichnet ist, sowie eine Papier-, Karton- oder Pappe-Herstellungsanlage, welche durch eine weitere unterbrochene Umfangslinie 3 dargestellt ist, unterteilt ist.

In der Zellstoff-Herstellungsanlage 2 wird hierbei ein nicht gebleichtes faseriges Einsatzmaterial bzw. ein Faserstoff oder auch ein Filtrat bei 5 auf eine Abtrennvorrichtung 6 aufgebracht, welche beispielsweise eine Filtration, ein Drucksortierer, eine Scheibenfiltration, eine Flotationsanlage oder auch eine Sedimentieranlage sein kann. In dieser Abtrennvorrichtung 6 werden cellulosische Feinstoffe bei 7 abgezogen und in der Folge gegebenenfalls einer Eindickung 8, beispielsweise durch Flotation unterworfen. Aus der Eindickung 8 abgezogenes Klarfiltrat, bestehend im Wesentlichen aus Wasser bzw. lösliche Chemikalien enthaltendes Wasser wird bei 9 abgezogen.

In der Abtrennvorrichtung 6 werden nicht nur cellulosische Feinstoffe aus nicht gebleichtem Einsatzmaterial abgezogen, sondern insbesondere das nicht gebleichte Einsatzmaterial bzw. der Faserstoff oder das Filtrat von den bei der Zellstoffherstellung nicht erwünschten cellulosischen Feinstoffen befreit, welches so befreite Einsatzmaterial bei 10 abgezogen wird und beispielsweise einem Bleichen (nicht dargestellt) zugeführt werden kann.

Die Feinstoffe enthaltende Suspension wird entweder über die Eindickung 8 geführt und dann aus dieser Eindickung 8 abgezogen und über Leitung 11 entweder direkt auf die Papiermaschine 4 aufgebracht und als Oberflächenvergütung verwendet oder gegebenenfalls mit weiteren, über Leitung 18 zugeführten, cellulosischen bzw. faserigen Feinstoffen, Additiven sowie Chemikalien, die aus der Papierherstellung enthalten werden können, bei 12 vermischt.

Alternativ kann die Verfahrensführung jedoch auch unter Umgehung der Eindickung 8 geführt werden, in welchem Fall die bei 7 abgezogenen Feinstoffe über die Leitung 11, wie oben beschrieben, weiter behandelt werden.

Die aus der Zellstoff-, Papier-, Karton oder Pappe-Herstellungsanlage gewonnenen Feinstoffe können in der Papier-, Karton oder Pappemaschine 4 auf den Faserstoff aufgetragen werden. Das Filtrat aus der Entwässerung der Papier-, Karton oder Pappemaschine 4 wird über Leitung 13 wiederum einer Trennung 14 zugeführt, bei welcher Trennung 14 Feinstoffe vom Klarfiltrat abgetrennt werden. Dieses Abtrennen kann wiederum durch Flotation oder beispielsweise mit Scheibenfiltern erfolgen. Das bei dieser Separation gewonnene klare Filtrat kann über Leitung 15 entweder wiederum direkt der Papiermaschine 4 zugeführt werden oder gegebenenfalls noch mit einem weiteren klaren Filtrat 16, welches aus einer optionalen Eindickung 17 stammen kann, vermischt werden und in der Folge der Papier-, Karton oder Pappemaschine 4 zugeführt werden. Die in der weiteren Eindickung 17 weiter konzentrierten cellulosischen Feinstoffe werden mit den aus der Zellstoff-Herstellungsanlage 2 stammenden cellulosischen Feinstoffe bei 12 vermischt und dann über Leitung 11 auf die Papier-, Karton oder Pappemaschine 4 aufgegeben.

Mit einer derartigen Verfahrensführung gelingt es, in den Filtraten und/oder Faserstoffsuspensionen aus der Papier- Karton, und/oder Zellstoffherstellung enthaltenen cellulosischen bzw. faserigen Feinstoffe aus dieser Filtration abzutrennen, das Material zu konzentrieren und als Oberflächenvergütungsmaterial auf eine bereits hergestellte Papier-, Karton oder Pappebahn aufzubringen, wodurch es gelingt, nicht nur die Oberflächeneigenschaften des Papiers, Kartons oder der Pappe deutlich zu verbessern, sondern insbesondere erreicht werden kann, dass die Dosierung von Retentionsmitteln stark verringert bzw. überhaupt vermieden werden kann und weiterhin der negative Einfluss der Feinstoffe auf die Entwässerung bei der Papierherstellung vermieden werden kann.

Die Erfindung ist weiterhin anhand von Ausführungsbeispielen näher erläutert.

### Beispiel 1: Mechanische-Papiereigenschaften

Nach Applikation der aus der Papierherstellung gewonnenen Feinstoffe (Feststoffgehalt ≥0.3 % Massenanteil Feinstoffe in Wasser) auf das feuchte Basispapier wurde der Einfluss auf die mechanischen Papiereigenschaften untersucht. Es ist deutlich erkennbar, dass der Auftrag von Feinstoffen - unabhängig vom Auftragsverfahren - die mechanischen Papiereigenschaften positiv beeinflusst. Die Applikation von Feinstoffen bewirkt eine Verdichtung des Fasernetzwerks und führt zu mehr Faser-Feinstoff Bindungen, welche positive Auswirkungen auf wichtige mechanische Eigenschaften wie zum Beispiel Zugfestigkeit, Steifigkeit, TEA (Tensile energy absorption) haben. Bei Applikationsmengen ab ca. 1 g/m² kann eine Steigerung der mechanischen Papiereigenschaften nachgewiesen werden, wobei die Verbesserungen der mechanischen Papiereigenschaften mit der Menge der applizierten Feinstoffe zunehmen.

Die nachfolgenden Beispiele (I) bis (IV) wurden jeweils mit einem Feinstoffauftragsgewicht von 3 g atro/m² auf ein Papierblatt mit einer flächenbezogenen Masse von 100 g/m² durchgeführt.

In Beispiel (I) wurde eine Verbesserung der mechanischen Papiereigenschaften um rund 10 % bei einem Feinstoffauftragsgewicht von 3 g atro/m² auf ein 100 g/m² Papierblatt erreicht.
A) Zugfestigkeit - gemessen nach ISO 1924-3-2005
   a.) Rohpapier - unbehandelte Muster → 7,5 kN/m
   b.) Papier + applizierter Feinstoff → 8,2 kN/m
B) Tensile Energy Absorption - gemessen nach ISO 1924-3-2005
   a.) Rohpapier - unbehandelte Muster → 165 J/m²
   b.) Papier + applizierter Feinstoff → 180 J/m²
C) Steifigkeit - gemessen nach ISO 1924-3-2005
   a.) Rohpapier - unbehandelte Muster → 775 kN/m
   b.) Papier + applizierter Feinstoff → 850 kN/m

Mit Feinstoffen behandelte Papiere weisen auch eine hohe Fettresistenz auf. Je nach Art und Anwendung ist ein KIT Wert (Test für Fettresistenz mit KIT Werten von 1 - keine Fettbarriere bis 12 - hervorgande Fettbarriere) bis 11 möglich.

In Beispiel (II) wurde die Fettresistenz gemessen (KIT Wert gemessen nach T559-cm-2012)
Rohpapier - feinstofffrei unbehandelt → KIT Wert = 1
Papier oberflächenbehandelt mit Feinstoff → KIT Wert = 11
Ein weiterer Vorteil ist, dass durch die Anwendung der Feinstoffe eine geschlossene Papieroberfläche möglich ist. Dies wurde mittels Bendtsen Luftdurchlässigkeit (Einheit: Milliliter Luft pro Minute) charakterisiert.

In Beispiel (III) wurde Luftdurchlässigkeit nach Bendtsen gemessen (DIN 53120-1-2018)
Rohpapier - feinstofffrei unbehandelt → 222 ml/min
Papier behandelt mit Feinstoff → 0 ml/min (dicht)
Feinstoffe verbessern auch die Wasserdampftransmission (WDT, Einheit: Masse an Wasserdampf pro m² in 24 Stunden) des Papiers und diese können als eine Wasserdampfbarriere oder zur Verbesserung der Wasserdampftransmission von diversen Papiersorten dienen. Eine niedrige WDT ist vor allem für die Verpackungspapiere relevant und kann mit den Feinstoffen positiv beeinflusst werden.

In Beispiel (IV) wurde die Wasserdampftransmission nach ISO 2528-2017 gemessen.
Rohpapier - feinstofffrei unbehandelt → WDT= 425 g/m²*24h
Papier behandelt mit Feinstoff → WDT= 170 g/m²*24h

### Beispiel 2. Erhöhung der Effektivität von Additiven, Einsparung von Retentionshilfsmitteln.

Werden Feinstoffe aus einem Abtrennungs-/Eindickungsschritt nicht wie üblich "zurück" im Kreislauf geführt, d.h. Rückführung in den Maschinenbehälter nach der Mahlung, wo unter anderem auch die Additive dosiert werden, ergeben sich Vorteile einer beinahe 100 %igen Retention sowie einer höheren Effektivität der dosierten Additive, wie beispielsweise von kationischer Stärke zur Steigerung der Festigkeit. Die Wirkungsweise ist darin begründet, dass Feinstoffe eine hohe spezifische Oberfläche und anionische Ladung aufweisen und somit die kationische Stärke bevorzugt binden, wodurch der Anstieg der Zugfestigkeit des Endprodukts geringer ausfällt. Durch die erfindungsgemäße Prozessführung sinkt der Anteil an Feinstoffen im Maschinenbehälter und somit besteht die Möglichkeit selbst bei einer geringeren Dosiermenge an Stärke oder einem anderen kationischen synthetischen oder natürlichem Polymer vergleichbare Papiereigenschaften zu erhalten.

Von einem industriell gemahlenem Zellstoff (Niederkonsistenz-Mahlung auf einen Mahlgrad von 20° SR) wurden Feinstoffe entfernt, wodurch der Mahlgrad auf 15° SR (gemessen nach ISO 5267-1:1999) reduziert werden konnte. Der Luftwiderstand sank ebenfalls merkbar ab (von 15 Sekunden auf unter 10 Sekunden). Die Zugfestigkeit von Laborblättern (nach ISO 1924-3:2005, Laborblätter nach ISO 5269-2:2004, Flächengewicht nach ISO 536:2012) sank in Folge des reduzierten Feinstoffgehaltes überraschenderweise nur geringfügig ab. Der Zellstoff wurde mit dem Filtrat einer Papiermaschine auf 0,5 % Stoffdichte bzw. Feststoffgehalt verdünnt und der pH-Wert wurde mit Aluminiumsulfat auf pH 6,8 eingestellt. Es wurden anschließend Dosierreihen mit kationisierter Stärke (2 ähnliche Typen) dahingehend durchgeführt, dass 10 kg Stärke/t Zellstoff, sowie 15 kg/t und 20 kg/t dosiert wurden. Es wurden dann Laborblätter mit 80 g/m² hergestellt. Die Laborblätter wurden über Nacht bei 23 °C und 50 % rel. Feuchte klimatisiert und getestet.

Die Ergebnisse der Tests sind in Tabelle 1 gezeigt

| | | Reduzierter Feinstoff | | | | | | | Referenz mit Feinstoff | | | | | |
|---|---|---|---|---|---|---|---|---|---|---|---|---|---|---|
| | Referenz | kationisierte Stärke Typ 2 | | | | kationisierte Stärke Typ 1 | | | kationisierte Stärke Typ 2 | | | kationisierte Stärke Typ 1 | | |
| | | 0 % | 1 % | 1,5 % | 2 % | 1 % | 1,5 % | 2 % | 1 % | 1,5 % | 2 % | 1 % | 1,5 % | 2 % |
| Mahlgrad °SR | 20 | 15 | k.A. | k.A. | k.A. | k.A. | k.A. | k.A. | k.A. | k.A. | k.A. | k.A. | k.A. | k.A. |
| Flächengewicht g/m² | 79 | 79 | 81 | 78 | 77 | 77 | 78 | 79 | 78 | 79 | 81 | 81 | 81 | 81 |
| Luftwiderstand s/(l/(m²*s)) | 15,6 | 4,92 | 3,65 | 3,39 | 3,26 | 3,18 | 3,35 | 3,40 | 10,3 | 9,18 | 8,69 | 9,47 | 9,08 | 9,64 |
| Zugfestigkeit N*m/g | 84,57 | 82,70 | 98,51 | 102,59 | 105,69 | 101,77 | 105,84 | 106,56 | 101,09 | 104,33 | 103,10 | 98,33 | 100,86 | 107,475 |
| Bruchdehnung % | 2,80 | 2,78 | 3,35 | 3,39 | 3,47 | 3,46 | 3,50 | 3,51 | 3,33 | 3,36 | 3,42 | 3,33 | 3,35 | 3,53 |
| Dehnungssteifigkeit kN/m | 692,8 | 678,7 | 697,9 | 683,0 | 673,3 | 637,8 | 680,6 | 684 | 682,2 | 710,9 | 712,8 | 703,4 | 699,6 | 718,7 |
| spez. Weiterreißwiderstand mN*m²/g | 12,7 | 13,4 | 11,8 | 10,1 | 9,90 | 10,2 | 9,94 | 10,5 | 9,81 | 9,12 | 9,32 | 10,0 | 9,54 | 9,32 |
| spez. Berstwinkel kPa*m²/g | 5,91 | 6,54 | 7,43 | 8,58 | 8,41 | 8,06 | 8,53 | 8,83 | 7,80 | 8,17 | 8,24 | 7,82 | 8,28 | 8,03 |
| spez. Zugbrucharbeit J/g | 1,66 | 1,59 | 2,19 | 2,31 | 2,41 | 2,31 | 2,44 | 2,45 | 2,24 | 2,33 | 2,34 | 2,21 | 2,27 | 2,51 |
| Weißegrad % ISO | 18,86 | 19,54 | 19,04 | 19,16 | 18,95 | 18,93 | 19,19 | 19,06 | 16,42 | 16,50 | 16,66 | 16,86 | 16,67 | 16,69 |

Beispiel 3. Nach dem Aufbringen bzw. dem Auftragen der Feinstoffe (Auftragsgewicht > 1 g atro/m²) auf das trockene Papierblatt wurde eine Reduktion der Luftdurchlässigkeit (gemessen mit Gurley ISO 5636-3-2013-11) und der Bendtsen-Rauigkeit (gemessen gemäß ISO 8791 -2-2013- 9) erreicht.

| | |
|---|---|
| Muster 1. | Papier ohne Feinstoffe - LD nach Gurley = 15 s (Sekunden) |
| | Papier mit Feinstoffen behandelt - LD nach Gurley = 126 s |
| Muster 2 . | Papier ohne Feinstoffe -Rauigkeit nach Bendtsen = 1575 ml/min |
| | Papier mit Feinstoffen behandelt - Rauigkeit nach Bendtsen = 673 ml/min |

Aus dem Verhältnis von Zugfestigkeit und Gurley Luftwiderstand, welches bei der Verfahrensführung im Vergleich zum Stand der Technik wesentlich verbessert ist, ist erkennbar, dass durch das Abtrennen der cellulosischen Feinstoffe aus den Filtraten und/oder Faserstoffsuspensionen einer Papier-, Karton-, Pappe- oder Zellstoff-Herstellungsanlage und das nachfolgende Aufbringen derselben auf die Papieroberfläche eine wesentliche Verbesserung der Eigenschaften des Papiers, der Pappe oder des Kartons erreicht werden kann.

## Patentansprüche

1. Verfahren zur Abtrennung von Feinstoffen aus Faserstoffsuspensionen und/oder Filtraten einer Papier-, Karton-, Pappe- oder Zellstoff-Herstellungsanlage und zum neuerlichen Aufbringen der abgetrennten Feinstoffe auf eine Oberfläche von Papier, Karton oder Pappe, **dadurch gekennzeichnet, dass** zumindest die nachfolgenden Schritte durchgeführt werden
a) Abtrennen der cellulosischen Feinstoffe aus den Faserstoffsuspensionen und/oder Filtraten mit einer Größe von kleiner als 1200 µm, insbesondere kleiner als 900 µm, vorzugsweise kleiner als 600 µm, noch bevorzugter kleiner als 400 µm, insbesondere bevorzugt kleiner als 200 µm (gemessen nach ISO 16065-1) sowie von gegebenenfalls enthaltenen weiteren Additiven,
b) gegebenenfalls Eindicken der abgetrennten cellulosischen Feinstoffe derselben,
c) gegebenenfalls Vermischen der abgetrennten cellulosischen Feinstoffe mit weiteren Feinstoffen aus einer Papier-, Karton-, Pappe- oder Zellstoffherstellung, und/oder mikro- oder nanofibrillierter Cellulose (MFC oder NFC),
d) gegebenenfalls Ausbilden einer wässerigen Suspension aus den Feinstoffen oder gegebenenfalls der Mischung von Feinstoffen aus der Papier-, Karton-, oder Pappenherstellung stammenden Additive,
e) gegebenenfalls Zusetzen zu der Suspension von in der Papier-, Karton-, Pappe- oder Zellstoffherstellung verwendeten Additiven insbesondere nativer, derivatisierter oder oxidativ behandelter Stärke, Leimungsmitteln, Nassfestmitteln oder anderen chemischen Additiven oder von Mineralen wie. z.B. Calciumcarbonat oder Kaolin,
f) homogenes Aufbringen der gebildeten Suspension auf die Oberfläche einer Papier-, Karton oder Pappenbahn in einer Menge zwischen 4 und 15 g atro/m² der in der Suspension befindlichen Feststoffe, wobei der Gehalt an Feinstoff in der Suspension bis zu 100 % der in der Suspension enthaltenen Trockenmasse, vorzugsweise unter 90,0 % der in der Suspension enthaltenen Trockenmasse beträgt, und
g) Trocknen des Papiers, Kartons oder der Pappe sowie gegebenenfalls gleichzeitiges oder nachfolgendes Pressen, Satinieren, Beschichten mit Additiven in einer Film- oder Sumpfleimpresse oder einem Sprühverfahren oder anderen in der Papier-, Karton- und Pappeherstellung eingesetzten Beschichtungsaggregaten,
h) gegebenenfalls Wiederholen der Schritte f) und g).

2. Verfahren nach Anspruch 1, wobei eine(s) oder mehrere der Faserstoffsuspensionen und/oder der Filtrate einer Papiermaschine, Karton- oder Pappemaschine oder Zellstoff-Herstellungsanlage, nach einem Sortieraggregat, wie beispielsweise einem Drucksortierer, einem Bogensieb oder einem Bandwäscher, die in dem Abtrennschritt zum Abtrennen von Feinstoffen sowie gegebenenfalls von weiteren enthaltenen Additiven verwendet werden, eingesetzt wird/werden.

3. Verfahren nach Anspruch 1 oder 2, wobei das Abtrennen der Feinstoffe aus den Faserstoffsuspensionen und/oder Filtraten in einem ein- oder mehrstufigen Filtrations- und Flotationsverfahren, insbesondere mit einem Scheibenfilter oder einem Flotationsverfahren, wie einer DAF (Dissolved Air Flotation) durchgeführt wird.

4. Verfahren nach Anspruch 1, 2 oder 3, wobei das Eindicken bis zu einem Gesamtfeststoffgehalt umfassend Feinstoffe sowie gegebenenfalls aus der Papier-, Karton oder Pappenherstellung stammende Additive zwischen 1 und 30 Gew.-%, insbesondere 3 bis 10 Gew.-% durchgeführt wird.

5. Verfahren nach einem der Ansprüche 1 bis 4, wobei der aus den Feinstoffen gebildeten Suspension als weitere Additive für die Oberflächenbehandlung von Papier, Karton oder Pappe wenigstens ein Additiv gewählt aus der Gruppe bestehend aus Calciumcarbonat, Talkum, Ton, Titandioxid, alkylierte Ketendimere (AKD), Alkenylbernsteinsäureanhydrid (ASA), kationische oder native/anionische Harzleime, Fettsäuren, kationische Stärke oder native, enzymatisch oder oxidativ abgebaute Stärke sowie Retentionsmittel zugesetzt wird.

6. Verfahren nach Anspruch 5, wobei ein Verhältnis Feinstoff zu weiteren Additiven zwischen 1:100 und 100:1, vorzugsweise zwischen 1:80 und 80:1, noch bevorzugter zwischen 1:20 und 20:1, am bevorzugtesten zwischen 1:15 und 15:1, wie beispielsweise 3:1 oder 1:3 gewählt wird.

7. Verfahren nach Anspruch 5 oder 6, wobei die Feinstoffe als mit den weiteren aus der Papier-, Karton- oder Pappenherstellung stammenden Additiven, wie Calciumcarbonat, Talkum, Ton, Titandioxid, alkylierte Ketendimere (AKD), Alkenylbernsteinsäureanhydrid (ASA), kationische oder native/anionische Harzleime, Fettsäuren, kationische Stärke oder native, enzymatisch oder oxidativ abgebaute Stärke sowie Retentionsmittel, imprägnierte Feinstoffe oder als Addukte der weiteren Additive an der Oberfläche der Feinstoffe eingesetzt werden.

8. Verfahren nach einem der Ansprüche 1 bis 7, wobei ein pH-Wert der auf eine Papier-, Pappe- oder Zellstoffoberfläche aufzubringenden Suspension zwischen pH 2 und pH 11, bevorzugt pH 3,5 und pH 9,5, insbesondere pH 4 und pH 9 gewählt wird.

9. Verfahren nach einem der Ansprüche 1 bis 8, wobei als Oberflächenbeschichtungsverfahren, ein Oberflächenbeschichten einer einen Trockengehalt zwischen 2 und 100 %, vorzugsweise 5 % bis 95 %, besonders bevorzugt 10 % bis 50 % aufweisenden Papierbahn, Karton- oder Pappebahn, wie beispielsweise mit einer Filmpresse oder Sumpfpresse oder ein Sprühverfahren eingesetzt wird.

10. Verfahren nach einem der Ansprüche 1 bis 9, wobei nach dem Oberflächenbeschichtungsverfahren ein Oberflächenvergütungsverfahren, wie Satinieren, Pressen, Trocknen auf einem polierten, Maschinen geglätteten Yankeezylinder, einer Beschichtungsanlage, wie einer Film- oder Sumpfleimpresse, Walzen oder Glätten durchgeführt wird.

11. Papier, Karton oder Pappe hergestellt nach einem Verfahren gemäß einem der Ansprüche 1 bis 10, wobei das Papier, der Karton oder die Pappe eine Oberflächenbeschichtung, welche zwischen 4 g atro/m² und 15 g atro/m² Feinstoffe sowie gegebenenfalls weitere Additive enthält, aufweist.

12. Papier, Karton oder Pappe nach Anspruch 11, wobei die Oberflächenbeschichtung eine Mischung aus Feinstoffen, insbesondere eine Mischung aus Feinstoffen sowie in den Filtraten von aus der Papier-, Karton-, Pappe- oder Zellstoffherstellung enthaltenen stammenden Additiven, wie Calciumcarbonat, Talkum, Ton, Titandioxid, alkylierte Ketendimere (AKD), Alkenylbernsteinsäureanhydrid (ASA), kationische oder native/anionische Harzleime, Fettsäuren, kationische Stärke oder native, enzymatisch oder oxidativ abgebaute Stärke sowie Retentionsmittel aufweist.

13. Papier, Karton oder Pappe nach Anspruch 11 oder 12, wobei die Oberflächenbeschichtung neben Feinstoffen, der Mischung aus Feinstoffen und den aus Filtraten der Papier-, Karton-, Pappe- oder Zellstoffherstellung stammenden Additiven, wie Calciumcarbonat, Talkum, Ton, Titandioxid, alkylierte Ketendimere (AKD), Alkenylbernsteinsäureanhydrid (ASA), kationische oder native/anionische Harzleime, Fettsäuren, kationische Stärke oder native, enzymatisch oder oxidativ abgebaute Stärke sowie Retentionsmittel weitere vor der Beschichtung zugesetzte Additive, wie Tenside, Polyacrylsäuresalze, Nassfestmittel oder Rheologieadditive enthält.

14. Papier, Karton oder Pappe nach Anspruch 11, 12 oder 13, wobei die weiteren Additive der Oberflächenbeschichtung in einer Menge von 0,5 Gew.-%, bis 99 Gew.-% der Trockenmasse der Beschichtung enthalten sind.

## Claims

1. Method for separating fines out of fibre suspensions and/or filtrates of a paper, cardboard, paperboard- or pulp production plant and for repeat application of the separated fines to a surface of paper, cardboard or paperboard, **characterized in that** at least the following steps are carried out
a) Separation of the cellulosic fines out of the fibre suspension and/or filtrates with a size less than 1200 µm, in particular less than 900 µm, preferably less than 600 µm, more preferably less than 400 µm, particularly preferably less than 200 µm (measured according to ISO 16065-1) and of further contained additives as applicable,
b) as applicable thickening the separated cellulosic fines of same,
c) as applicable mixing the separated cellulosic fines with further fines from paper, cardboard, paperboard or pulp production, and/or micro- or nanofibrillated cellulose (MFC or NFC),
d) as applicable forming an aqueous suspension from the fines, or as applicable from the mixture of fines originating from paper, cardboard, or paperboard production with additives,
e) as applicable adding to the suspension of additives used in paper, cardboard, paperboard or pulp production, in particular native, derivatised or oxidatively treated starch, sizing agents, wet strength agents or other chemical additives or from minerals such as for example calcium carbonate or kaolin,
f) homogeneous application of the suspension formed to the surface of a paper, cardboard or paperboard web in a quantity between 4 and 15 g abs. dry/m² (abs. dry = absolutely dry) of the solids present in the suspension, wherein the fines content in the suspension constitutes up to 100% of the dry mass contained in the suspension, preferably less than 90.0% of the dry mass contained in the suspension, and
g) drying the paper, cardboard or paperboard and as applicable simultaneous or subsequent pressing, satinising, coating with additives in a film- or pond-style size press or a spraying process or other coating units used in paper, cardboard and paperboard production,
h) as applicable repeating steps f) and g).

2. Method according to Claim 1, wherein one or more of the fibre suspensions and/or the filtrates is/are introduced into a papermaking machine, cardboard or paperboard machine or pulp production plant after a sorting unit, such as a pressure screening system for example, a curved screen or a belt washer, which are used in the separation step for separating fines and as applicable other additives contained.

3. Method according to Claim 1 or 2, wherein the separation of the fines out of the fibre suspensions and/or filtrates is carried out in a single- or multistage filtration and flotation process, in particular with a disc filter or a flotation process, such as a DAF (Dissolved Air Flotation) process.

4. Method according to Claim 1, 2 or 3, wherein the coagulation is performed until a total solid content comprising fines and as applicable additives originating from paper, cardboard or paperboard production between 1 and 30% by weight, in particular 3 to 10% by weight is achieved.

5. Method according to any one of Claims 1 to 4, wherein at least one additive selected from the group consisting of calcium carbonate, talcum, clay, titanium dioxide, alkylated ketene dimers (AKD), alkenyl succinic acid anhydride (ASA), cationic or native/anionic resin sizes, fatty acids, cationic starch or native, enzymatically or oxidatively degraded starch and retention agents is/are added as further additives to the suspension formed from the particulates for the surface treatment of paper, cardboard or paperboard.

6. Method according to Claim 5, wherein a ratio of fines to further additives between 1:100 and 100:1, preferably between 1:80 and 80:1, more preferably between 1:20 and 20:1, most preferably between 1:15 and 15:1, such as for example 3:1 or 1:3 is selected.

7. Method according to Claim 5 or 6, wherein the fines are used as fines impregnated with the further additives originating from paper, cardboard or paperboard production, such as calcium - carbonate, talcum, clay, titanium dioxide, alkylated ketene dimers (AKD), alkenyl succinic acid anhydride (ASA), cationic or native/anionic resin sizes, fatty acids, cationic starch or native, enzymatically or oxidatively degraded starch and retention agents, or as adducts of the further additives on the surface of the fines.

8. Method according to any one of Claims 1 to 7, wherein a pH of the suspension to be applied to a paper, paperboard or pulp surface is chosen between pH 2 and pH 11, preferably pH 3.5 and pH 9.5, in particular pH 4 and pH 9.

9. Method according to any one of Claims 1 to 8, wherein a surface coating of a paper web, cardboard or paperboard web having a dry content between 2% and 100%, preferably 5% to 95%, particularly preferably 10% to 50%, such as for example with a film press or pond-style size press or a spraying process is used as a surface coating process.

10. Method according to any one of Claims 1 to 9, wherein after the surface coating process a surface finishing process such as satinising, pressing, drying on a polished, machine smoothed Yankee cylinder, a coating system such as film- or pond-style size press, rolling or calendering is carried out.

11. Paper, cardboard or paperboard produced according to a method according to any one of Claims 1 to 10, wherein the paper, cardboard or paperboard has a surface coating which contains between at least 4 g abs. dry/m² and 15 g abs. dry/m² fines and further additives as applicable.

12. Paper, cardboard or paperboard according to Claim 11, wherein the surface coating includes a mixture of fines, in particular a mixture of fines and additives originating in the filtrates from paper, cardboard, paperboard- or pulp production, such as calcium carbonate, talcum, clay, titanium dioxide, alkylated ketene dimers (AKD), alkenyl succinic acid anhydride (ASA), cationic or native/anionic resin sizes, fatty acids, cationic starch or native, enzymatically or oxidatively degraded starch and retention agents.

13. Paper, cardboard or paperboard according to Claim 11 or 12, wherein besides fines, the mixture of fines and the additives originating in the filtrates from paper, cardboard, paperboard- or pulp production, such as calcium carbonate, talcum, clay, titanium dioxide, alkylated ketene dimers (AKD), alkenyl succinic acid anhydride (ASA), cationic or native/anionic resin sizes, fatty acids, cationic starch or native, enzymatically or oxidatively degraded starch and retention agents, the surface coating contains further additives such as tensides, polyacrylic acid salts, wet strength agents or rheology additives, which are added before the coating.

14. Paper, cardboard or paperboard according to Claim 11, 12 or 13, wherein the further additives of the surface coating are contained in a quantity from 0.5% by weight to 99% by weight of the dry mass of the coating.

## Revendications

1. Procédé de séparation de particules fines de suspensions de fibres et/ou de filtrats d'une installation de fabrication de papier, de carton, de carton-pâte ou de cellulose, et de nouvelle application des particules fines séparées sur une surface de papier, de carton ou de carton-pâte, **caractérisé en ce que** les étapes suivantes au moins sont effectuées
a) séparer les particules fines cellulosiques des suspensions de fibres et/ou des filtrats avec une taille inférieure à 1200 µm, en particulier inférieure à 900 µm, de préférence inférieure à 600 µm, de manière davantage préférée inférieure à 400 µm, et en particulier de manière préférée inférieure à 200 µm (mesurée selon la norme ISO 16065-1), ainsi que, le cas échéant, d'autres additifs contenus,
b) le cas échéant, épaissir les particules fines cellulosiques séparées de celles-ci,
c) le cas échéant, mélanger les particules fines cellulosiques séparées à d'autres particules fines issues d'une fabrication de papier, de carton, de carton-pâte ou de pâte de cellulose, et/ou de cellulose micro ou nano-fibrillée (MFC ou NFC),
d) le cas échéant, préparer une suspension aqueuse à partir des particules fines ou, le cas échéant, du mélange de particules fines provenant des additifs issus de la fabrication de papier, de carton ou de carton-pâte,
e) le cas échéant, ajouter à la suspension des additifs utilisés dans la fabrication du papier, du carton, du carton-pâte ou de la pâte de cellulose, en particulier de l'amidon natif, dérivé ou traité par oxydation, des agents de collage, des agents de solidité à l'humidité ou d'autres additifs chimiques, ainsi que des minéraux tels que du carbonate de calcium ou du kaolin, par exemple,
f) appliquer de manière homogène la suspension obtenue sur la surface d'une bande de papier, de carton ou de carton-pâte en une quantité comprise entre 4 et 15 g atro/m² des matières solides présentes dans la suspension, dans lequel la teneur en particules fines dans la suspension atteint jusqu'à 100 % de la masse sèche contenue dans la suspension, de préférence inférieure à 90,0 % de la masse sèche contenue dans la suspension, et
g) sécher le papier, le carton ou le carton-pâte, ainsi que, le cas échéant, presser, satiner et revêtir avec des additifs, simultanément ou ultérieurement, dans une presse à film ou à pâte, un procédé de pulvérisation ou d'autres équipements de revêtement utilisés dans la fabrication du papier, du carton et du carton-pâte,
h) le cas échéant, répéter les étapes f) et g).

2. Procédé selon la revendication 1, dans lequel on emploie une ou plusieurs des suspensions de fibres et/ou des filtrats d'une machine à papier, d'une machine à carton ou à carton-pâte ou d'une installation de fabrication de cellulose, après un organe de tri, tel que, par exemple, un trieur à pression, un tamis à plat ou un laveur à bande, qui sont utilisés dans l'étape de séparation pour éliminer des particules fines et, le cas échéant, d'autres additifs contenus.

3. Procédé selon la revendication 1 ou 2, dans lequel la séparation des particules fines des suspensions de fibres et/ou des filtrats est réalisée dans un procédé de filtration et de flottation en une ou plusieurs étapes, en particulier avec un filtre à disque ou un procédé de flottation tel qu'une DAF (flottation à air dissous).

4. Procédé selon la revendication 1, 2 ou 3, dans lequel l'épaississement est réalisé jusqu'à une teneur totale en matières solides comprenant des particules fines ainsi que, le cas échéant, des additifs provenant de la fabrication de papier, de carton ou de carton-pâte entre 1 et 30 % en poids, en particulier entre 3 et 10 % en poids.

5. Procédé selon l'une des revendications 1 à 4, dans lequel on ajoute à la suspension formée à partir des particules fines, en tant qu'additif supplémentaire pour le traitement de surface du papier, du carton ou du carton-pâte, au moins un additif choisi dans le groupe constitué du carbonate de calcium, du talc, de l'argile, du dioxyde de titane, des dimères de cétène alkylés (AKD), de l'anhydride d'acide alcényle succinique (ASA), des colles résines cationiques ou natives/anioniques, des acides gras, de l'amidon cationique ou natif, de l'amidon dégradé par voie enzymatique ou par oxydation ainsi que des agents de rétention.

6. Procédé selon la revendication 5, dans lequel un rapport des particules fines à d'autres additifs est choisi entre 1:100 et 100:1, de préférence entre 1:80 et 80:1, de manière encore plus préférée entre 1:20 et 20:1, et idéalement entre 1:15 et 15:1, par exemple 3:1 ou 1:3.

7. Procédé selon la revendication 5 ou 6, dans lequel les particules fines sont utilisées en tant que particules fines imprégnées avec d'autres additifs provenant de la fabrication de papier, de carton ou de carton-pâte, tels que le carbonate de calcium, le talc, l'argile, le dioxyde de titane, les dimères de cétène alkylés (AKD), l'anhydride d'acide alcényle succinique (ASA), les colles résines cationiques ou natives/anioniques, les acides gras, l'amidon cationique ou l'amidon natif dégradé par voie enzymatique ou par oxydation, ainsi que des agents de rétention, ou comme des adduits des autres additifs sur la surface des particules fines.

8. Procédé selon l'une des revendications 1 à 7, dans lequel la valeur du pH de la suspension à appliquer sur une surface de papier, de carton-pâte ou de pâte de cellulose est choisie entre pH 2 et pH 11, de manière préférée entre pH 3,5 et pH 9,5, en particulier entre pH 4 et pH 9.

9. Procédé selon l'une des revendications 1 à 8, dans lequel un revêtement de surface d'une bande de papier, de carton ou de carton-pâte présentant une teneur en matières sèches comprise entre 2 et 100 %, de préférence entre 5 % et 95 %, de manière particulièrement préférée entre 10 % et 50 %, est employé en tant que procédé de revêtement de surface, par exemple à l'aide d'une presse à film, d'une presse à puits ou d'un procédé de pulvérisation.

10. Procédé selon l'une des revendications 1 à 9, dans lequel un procédé de finition de surface, tel que le satinage, le pressage, le séchage sur un cylindre Yankee poli et lissé à la machine d'une installation de revêtement, telle qu'une presse à film ou une presse à colle à puits, ainsi que par laminage ou lissage, est effectué après le procédé de revêtement de surface.

11. Papier, carton ou carton-pâte fabriqué selon un procédé selon l'une des revendications 1 à 10, dans lequel le papier, le carton ou le carton-pâte présente un revêtement de surface qui contient entre au moins 4 g atro/m² et 15 g atro/m² de particules fines ainsi que, le cas échéant, d'autres additifs.

12. Papier, carton ou carton-pâte selon la revendication 11, dans lequel le revêtement de surface présente un mélange de particules fines, en particulier un mélange de particules fines ainsi que des additifs contenus dans les filtrats provenant de la fabrication de papier, de carton, de carton-pâte ou de pâte de cellulose, tels que le carbonate de calcium, le talc, l'argile, le dioxyde de titane, les dimères de cétène alkylés (AKD), l'anhydride d'acide alcényle succinique (ASA), les colles résines cationiques ou natives/anioniques, les acides gras, l'amidon cationique ou natif, ainsi que l'amidon natif dégradé par voie enzymatique ou par oxydation et des agents de rétention.

13. Papier, carton ou carton-pâte selon la revendication 11 ou 12, dans lequel le revêtement de surface contient, en plus de particules fines, du mélange de particules fines et des additifs provenant de filtrats issus de la fabrication de papier, de carton, de carton-pâte ou de pâte de cellulose, tels que le carbonate de calcium, le talc, l'argile, le dioxyde de titane, les dimères de cétène alkylés (AKD), l'anhydride d'acide alcényle succinique (ASA), les colles résines cationiques ou natives/anioniques, les acides gras, l'amidon cationique ou l'amidon natif dégradé par voie enzymatique ou par oxydation, ainsi que les agents de rétention, d'autres additifs ajoutés avant le revêtement, tels que des tensioactifs, des sels d'acide polyacrylique, des agents de résistance à l'état humide ou des additifs rhéologiques.

14. Papier, carton ou carton-pâte selon les revendications 11, 12 ou 13, dans lequel les autres additifs du revêtement de surface sont contenus en une quantité de 0,5 % à 99 % en poids de la masse sèche du revêtement.
